# FASCICULE DE BREVET EUROPEEN

(11) **EP 0 545 782 B1**
(45) Date de publication et mention de la délivrance du brevet: **05.07.1995**
(21) Numéro de dépôt: 92403183.4
(22) Date de dépôt: 25.11.1992
(51) Int. Cl.: F27B 15/00, F27B 7/20, C04B 7/43

(54) **Dispositif pour répartir pneumatiquement des poudres dans une section annulaire et four l'utilisant**
Lufttransporteinrichtung für die Zuteilung von Pulvern im ringförmigen Abschnitt und Ofen mit dieser Einrichtung
Pneumatic device for the distribution of powders in an annular section and furnace using it

(30) Priorité: 27.11.1991 FR 9114672
(43) Date de publication de la demande: 09.06.1993
(73) Titulaire: F C B, 93100 Montreuil Cédex (FR); CIMENTS FRANCAIS, Société Anonyme, F-92800 Puteaux (FR)
(72) Inventeur: Jorget, Serge, F-59700 Marq-en-Baroeul (FR); Niel, Philippe, F-59000 Lille (FR); Decuyper, Francis, F-59160 Lomme (FR)
(74) Mandataire: Fontanié, Etienne

(56) Documents cités:
- EP-A- 0 279 169
- EP-A- 0 347 126
- FR-A- 2 221 416
- FR-A- 2 522 392
- FR-A- 2 659 134

## Description

De nombreux procédés de transformation de matières premières comportent une étape de traitement thermique, parfois combinée à une réaction chimique, avec un gaz. L'efficacité maximale des échanges thermiques et de la réaction chimique est obtenue lorsqu'on peut mettre les matières solides en contact avec le gaz sous une forme finement divisée.

C'est en particulier le cas de la calcination ou la précalcination des matières premières pour la fabrication du clinker de ciment. Pour cette opération, on utilise généralement des fours verticaux, présentant une symétrie de révolution et équipés d'un ou plusieurs brûleurs et de moyens pour introduire les matières solides dans le four et les disperser dans les gaz chauds produits par le ou les brûleurs. Il est difficile de réaliser une dispersion correcte des matières solides dans les gaz, surtout lorsque le four a un grand diamètre (supérieur à 2 m). On pourrait multiplier les points d'introduction des matières dans le four, mais l'équirépartition d'un courant de matières solides chaudes entre plusieurs entrées pose des problèmes que l'on ne sait pas résoudre de manière satisfaisante. On a proposé d'introduire les matières solides en suspension dans un courant de gaz pénétrant tangentiellement dans le four mais cette solution présente l'inconvénient de provoquer la centrifugation des matières solides qui entraîne une ségrégation granulométrique et, par conséquent, des différences de traitement des particules suivant leur grosseur.

Suivant une autre proposition (FR.A.2659134), on introduit les matières solides dans le four en suspension dans un courant de gaz à section annulaire, qui entoure la flamme du brûleur et dont la direction principale d'écoulement est parallèle à celle des gaz constituant la flamme, de façon à former un rideau mobile de matières autour de la flamme et utiliser au mieux son rayonnement pour le traitement des matières. L'efficacité maximale est atteinte lorsque les matières sont réparties de façon dense et régulière, sur une faible épaisseur, tout autour de la flamme, toute irrégularité de répartition créant des discontinuités du rideau et risquant de provoquer des surchauffes locales, mais aucun moyen n'est prévu pour assurer une telle répartition.

Le document FR.A.2522392 a pour objet un brûleur à charbon pulvérisé dans lequel le gaz chargé des particules de charbon circule dans un conduit à section annulaire dont la longueur est grande par rapport au diamètre. Les pertes de charge, relativement importantes dans ce conduit, permettent d'obtenir une répartition régulière des particules de charbon dans toute la section du conduit, à son extrémité de sortie. Cette solution n'est pas adaptée à l'alimentation en matière solide des fours de grand diamètre, car elle conduirait à donner au conduit une grande longueur ou une faible section et, par conséquent, à réaliser un dispositif très encombrant ou présentant des risques de colmatage.

Le but de la présente invention est de fournir un dispositif permettant de répartir de manière uniforme les matières solides dans une section annulaire. Ce dispositif peut être utilisé, en particulier, pour la mise en oeuvre du procédé d'alimentation en matières solides d'un four de calcination.

L'invention a pour objet un dispositif pour répartir des matières solides pulvérulentes dans une section annulaire de grand diamètre comprenant un conduit d'amenée du courant de gaz transportant les matières solides qui est raccordé latéralement à la paroi extérieure d'un corps tubulaire, à double paroi, près de l'une de ses extrémités et une ouverture de sortie annulaire ménagée à l'autre extrémité dudit corps tubulaire, ou une série d'ouvertures régulièrement réparties sur le pourtour dudit corps tubulaire, à cette autre extrémité, caractérisé en ce que l'intérieur dudit corps tubulaire forme une chambre annulaire à axe vertical ou voisin de la verticale, en ce que ledit conduit est raccordé à la partie supérieure, qui est fermée, de telle sorte que ledit courant pénètre dans ladite chambre suivant une direction approximativement radiale et en ce que l'aire de la section droite de ladite chambre, au moins dans sa partie supérieure, est nettement plus grande que l'aire de la section dudit conduit et que l'aire de ladite ouverture annulaire de sortie ou l'aire totale desdites ouvertures.

Les parties supérieures, cylindriques des parois intérieure et extérieure de la chambre pourront avoir un axe commun ou des axes parallèles voisins; dans ce dernier cas, la distance entre les axes ne sera pas supérieure à 0,3 fois la différence entre les rayons intérieurs des parois intérieure et extérieure de la chambre.

Les parties inférieures, convergentes des parois de la chambre pourront être orientées de façon à créer un courant annulaire de forme cylindrique ou conique ou évasé, et l'ouverture de sortie annulaire pourra être munie d'aubes, orientées de façon à imprimer un mouvement de rotation autour de l'axe du dispositif au courant de gaz sortant par cette ouverture.

Dans le cas ou l'ouverture annulaire est remplacée par une série d'ouvertures, celles-ci seront prévues à l'extrémité de courts canaux orientés de façon à produire un courant de gaz de forme voulue et, éventuellement, à lui communiquer un mouvement de rotation.

Le conduit d'amenée du courant de gaz transportant les matières solides pourra être remplacé par deux conduits ou plus, de section équivalente, raccordés approximativement radialement au dispositif.

L'invention a également pour objet un four vertical comportant une chambre de combustion placée sur le plafond du four et un dispositif pour l'introduction des matières solides à traiter tel que décrit dans les paragraphes précédents et disposé concentriquement à la chambre de combustion.

D'autres caractéristiques de l'invention apparaîtront à la lecture de la description qui suit et se réfère au dessin l'accompagnant qui montre, à titre d'exemple non limitatif, deux formes de réalisation de l'invention et sur lequel :
La figure 1 est une coupe par un plan diamétral d'un four de précalcination à axe vertical équipé d'un répartiteur conforme à l'invention;
La figure 2 est une vue de dessous du plafond du four montrant l'ouverture de sortie annulaire du distributeur; avec une représentation en coupe de la paroi extérieure du répartiteur; et
La figure 3 est une vue similaire à la figure 2 illustrant une variante de réalisation.

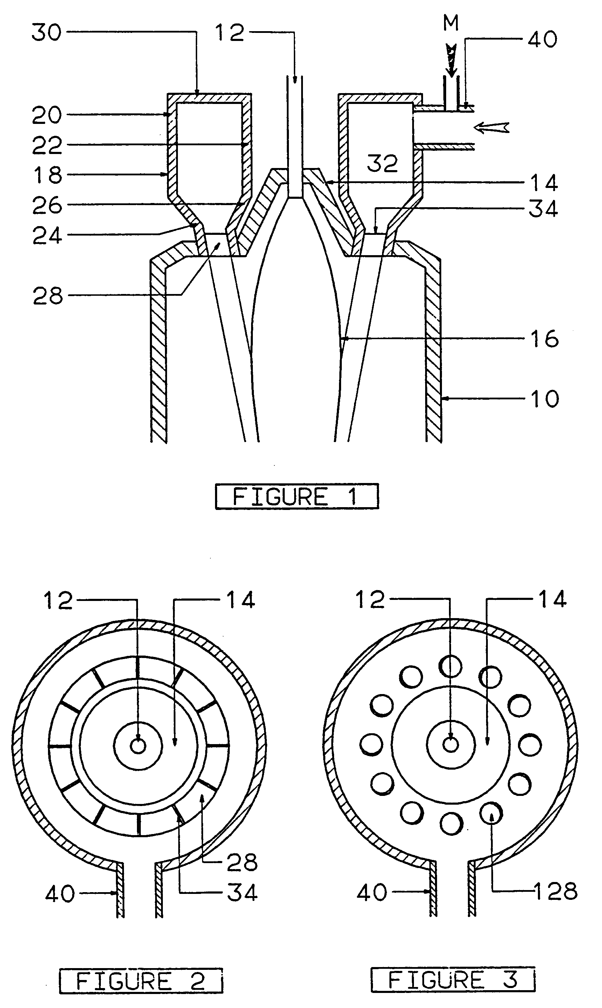

Le four 10 dont seule la partie supérieure est représentée sur la figure 1 est destiné à être utilisé pour la précalcination des matières premières dans une installation de production de clinker de ciment par voie sèche. Il reçoit les matières premières préchauffées, sous forme de farine, et alimente un four tubulaire rotatif où la calcination des matières premières est complétée et où celles-ci sont transformées en clinker.

Ce four présente une symétrie de révolution et son axe est vertical. Il est chauffé par un brûleur 12 équipant une chambre de combustion 14 placée sur le plafond du four, en son centre. Ce brûleur produit une flamme 16 qui se développe vers le bas dans le four.

Les matières premières M provenant du préchauffeur sont introduites dans le four au moyen du répartiteur 18. Elles sont mises en suspension dans un courant de gaz circulant dans une conduite 40 raccordée radialement au répartiteur et transportées pneumatiquement jusqu'à ce dernier; le gaz peut être de l'air chaud provenant du refroidisseur de clinker ou le gaz d'échappement du four rotatif.

Le répartiteur 18 est annulaire et est monté sur le four 10 autour de la chambre de combustion 14, son axe coïncidant avec celui du four. Il est constitué dans sa partie supérieure et sa partie médiane par deux parois cylindriques concentriques 20 et 22 et dans sa partie inférieure par deux parois 24 et 26 qui convergent de façon à former à l'extrémité inférieure du répartiteur une ouverture de sortie annulaire 28 qui débouche dans le four; l'extrémité supérieure du répartiteur est fermée par un couvercle 30.

Chacune des parois 24 et 26 est formée de deux troncs de cônes de révolution dont les conicités sont choisies en fonction de la forme du courant gazeux que l'on souhaite produire dans le four; dans l'exemple représenté, elles ont été choisies pour produire un courant conique creux.

L'intérieur du répartiteur constitue une chambre 32 dont la section droite - section par un plan perpendiculaire à l'axe du répartiteur - a une aire qui est constante dans les parties supérieure et médiane et décroît progressivement dans la partie inférieure, jusqu'à l'ouverture de sortie 28. Le rapport de l'aire de la section droite de la partie supérieure de la chambre 32 à l'aire de l'ouverture de sortie 28 est supérieur à 3. Le rapport des aires des sections droites de la partie supérieure de la chambre 32 et de la conduite 40 est aussi supérieur à 3.

A leur extrémité inférieure, les parois 24 et 26 sont entretoisées par des aubes 34 qui améliorent la tenue mécanique de l'ensemble. Ces aubes peuvent être disposées verticalement ou légèrement inclinées pour communiquer un mouvement de rotation à faible vitesse au courant de gaz sortant du répartiteur.

En variante, l'ouverture annulaire 28 pourrait être remplacée par une série d'ouvertures 128 disposées le long d'un cercle, comme représenté sur la figure 3. Ces ouvertures constitueront la sortie de courts canaux convenablement orientés pour créer un courant gazeux creux et de forme voulue - conique, cylindrique ou évasé - et éventuellement pour communiquer un mouvement de rotation à faible vitesse à ce courant. L'aire totale de ces ouvertures devra être suffisante pour que l'ensemble des courants individuels qui en sortent puissent constituer, à faible distance du répartiteur, un courant à section annulaire, sans discontinuité. Dans ce but, lesdits canaux pourront avoir une section progressivement croissante de l'intérieur du répartiteur vers l'extérieur.

La conduite d'alimentation 40 du répartiteur pourrait être remplacée si nécessaire par deux conduites ou plus, de section totale équivalente, dont les axes seraient situés, comme l'axe de la conduite 40, dans des plans contenant l'axe du répartiteur et qui déboucheraient dans le répartiteur en des points circonférentiellement espacés l'un de l'autre. Il faut cependant noter que lorsque la source des matières à traiter est unique, il est avantageux de pouvoir transporter pneumatiquement le débit total des matières jusqu'au répartiteur au moyen d'une seule conduite.

Bien que dans la forme de réalisation décrite ci-dessus, le four et le répartiteur aient un axe vertical, le répartiteur de l'invention peut aussi être utilisé dans des positions différentes, avec son axe incliné sur la verticale; l'angle que fait son axe avec la verticale ne doit pas toutefois excéder 30°.

Au lieu d'être concentriques, les deux parois cylindriques 20 et 22 pourraient avoir des axes parallèles décalés, l'axe de l'ouverture annulaire 28 étant confondu avec l'un des axes ou décalé par rapport aux deux axes; La partie inférieure de la chambre 32 serait alors délimitée par des parois à surface conique dont les axes feraient avec les axes des parois 20 et 22 des angles dont la valeur serait fonction du décalage de ces derniers par rapport à l'axe de l'ouverture 28. Le décalage l'un par rapport à l'autre des axes des parties cylindriques des parois de la chambre ne devra pas être supérieur à 0,3 fois la différence entre les rayons intérieurs des parois intérieure et extérieure de la chambre.

La forme et les dimensions du répartiteur permettent d'avoir des faibles vitesses dans la partie supérieure de la chambre 32. Par exemple, pour une vitesse des gaz dans la conduite 40 comprise entre 12 et 25 m/s, la vitesse moyenne dans la section droite de la partie supérieure de la chambre 32 sera inférieure à 5 m/s. Cette faible vitesse, de même que l'entrée radiale dans le répartiteur, évitent les ségrégations dues à des centrifugations générales ou locales.

Comme autres avantages du répartiteur de l'invention, on peut citer :
- la faculté de fonctionner correctement avec des fortes charges de matières (supérieures à 1 kg/kg de gaz) et la faible sensibilité à des variations de débits ou à des incidents (on notera que les pentes des parois 24 et 26 sont supérieures à l'angle de talus des matières traitées pour éviter tout dépôt).
- la possibilité d'avoir une seule alimentation en un point quelconque de sa périphérie.
- la possibilité de pouvoir communiquer à la sortie du répartiteur, un mouvement de rotation au courant de gaz, avec une vitesse choisie en fonction des besoins de l'appareil alimenté.
- la facilité de construction, résultant de la simplicité des formes, dans le cas où les produits sont à haute température et les parois du répartiteur doivent être protégées intérieurement par un revêtement réfractaire.

## Revendications

1. Un dispositif pour répartir des matières solides pulvérulentes dans une section annulaire de grand diamètre comprenant un conduit (40) d'amenée du courant de gaz transportant les matières solides qui est raccordé latéralement à la paroi extérieure (20) d'un corps tubulaire (18), à double paroi, près de l'une de ses extrémités et une ouverture de sortie annulaire (28) ménagée à l'autre extrémité dudit corps tubulaire, ou une série d'ouvertures (128) régulièrement réparties sur le pourtour dudit corps tubulaire, à cette autre extrémité, caractérisé en ce que l'intérieur dudit corps tubulaire (18) forme une chambre annulaire (32) à axe vertical ou voisin de la verticale, en ce que ledit conduit (40) est raccordé à la partie supérieure, qui est fermée, de telle sorte que ledit courant pénètre dans ladite chambre suivant une direction approximativement radiale, et en ce que l'aire de la section droite de ladite chambre (32), au moins dans sa partie supérieure, est nettement plus grande que l'aire de la section dudit conduit (40) et que l'aire de ladite ouverture annulaire de sortie (28) ou l'aire totale desdites ouvertures (128).

2. Dispositif selon la revendication 1, caractérisé en ce que le rapport de l'aire de la section droite de la partie supérieure, cylindrique de la chambre (32) à l'aire de ladite ouverture annulaire (28) ou à l'aire totale des dites ouvertures (128) est supérieur à 3.

3. Dispositif selon la revendication 1 ou 2, caractérisé en ce que le rapport de l'aire de la section droite de la partie supérieure, cylindrique de la chambre (32) à l'aire de la section du conduit (40) d'amenée du courant de gaz transportant les matières solides est supérieur à 3.

4. Dispositif selon la revendication 1, 2 ou 3, caractérisé en ce que la partie supérieure de la chambre (32) est délimitée par deux parois cylindriques, intérieure et extérieure (20, 22), dont les axes sont confondus.

5. Dispositif selon la revendication 1, 2 ou 3, caractérisé en ce que la partie supérieure de la chambre (32) est délimitée par deux parois cylindriques dont les axes sont décalés.

6. Dispositif selon la revendication 4 ou 5 caractérisé en ce que les parties inférieures (24, 26) desdites parois sont orientées de façon à créer un courant de gaz à section annulaire de forme cylindrique ou conique ou évasé.

7. Dispositif selon l'une quelconque des revendications précédentes, caractérisé en ce que ladite ouverture annulaire (28) est munie d'aubes (34) orientées de façon à imprimer au courant de gaz un mouvement de rotation autour de l'axe du dispositif.

8. Dispositif selon l'une quelconque des revendications 1 à 6, caractérisé en ce que lesdites ouvertures (128) sont prévues à l'extrémité de courts canaux orientés de façon à imprimer au courant de gaz un mouvement de rotation autour de l'axe du dispositif.

9. Dispositif selon l'une quelconque des revendications précédentes, caractérisé en ce que ledit conduit (40) est remplacé par plusieurs conduits de section totale équivalente raccordés à la partie supérieure de la chambre (32) de telle sorte que les courants de gaz amenés par lesdits conduits pénètrent dans cette dernière suivant des directions approximativement radiales.

10. Four vertical pour la calcination de matières solides pulvérulentes comportant une chambre de combustion placée sur le plafond du four et des moyens pour introduire les matières solides dans le four, caractérisé en ce que lesdits moyens sont constitués par un dispositif conforme à l'une quelconque des revendications précédentes qui est placé sur le plafond du four, concentriquement à la chambre de combustion (14).

## Claims

1. A device intended to distribute pulverulent solid materials in a large-diameter ring-shaped section consisting of a duct (40) that supplies the gas flow carrying the solid materials and is connected laterally to the outside wall (20) of a double-wall tubular body (18), close to one of its ends, and a ring-shaped outlet opening (28) made at the other end of the said tubular body, or a series of openings (128) regularly distributed on the periphery of the said tubular body, at that other end, characterized in that the inside of the said tubular body (18) forms a vertical or quasi-vertical axis ring-shaped chamber (32), in that the said duct (40) is connected to the top part, which is closed, so that the said flow enters the said chamber in a roughly radial direction, and in that the cross-section area of the said chamber (32), at least in its top part, is markedly larger than the cross-section area of the said duct (40) and than the area of the said outlet ring-shaped opening (28) or the total area of the said openings (128).

2. Device according to claim 1, characterized in that the ratio between the cross-section area of the cylindrical top part of the chamber (32) and the area of the said ring-shaped opening (28) or the total area of the said openings (128) is higher than 3.

3. Device according to claim 1 or 2, characterized in that the ratio between the cross-section area of the cylindrical top part of the chamber (32) and the cross-section area of the duct (40) that supplies the gas flow carrying the solid materials is higher than 3.

4. Device according to claim 1, 2 or 3, characterized in that the top part of the chamber (32) is delimited by two cylindrical walls (20, 22), namely one inner and one outer walls, the axes of which are coincident.

5. Device according to claim 1, 2 or 3, characterized in that the top part of the chamber (32) is delimited by two cylindrical walls (20, 22) the axes of which are not coincident.

6. Device according to claim 4 or 5, characterized in that the lower parts (24, 26) of the said walls are so directed as to create a cylindrical, conical or funnel-shaped annular cross-section gas flow.

7. Device according to any of the above claims, characterized in that the said ring-shaped opening (28) is provided with blades (34) so directed as to impart a rotational motion about the axis of the device to the gas flow.

8. Device according to any of claims 1 to 6, characterized in that the said openings (128) are provided at the end of short channels so directed as to impart a rotational motion about the axis of the device to the gas flow.

9. Device according to any of the above claims, characterized in that the said duct (40) is replaced by several ducts having an equivalent total cross-section area and so connected to the top part of the chamber (32) that the gas flows supplied by the said ducts enter the latter in approximately radial directions.

10. Vertical kiln for calcining pulverulent solid materials comprising a combustion chamber placed on the roof of the kiln and means of feeding the solid materials into the kiln, characterized in that the said means consist of a device conforming with any of the above claims which is placed on the roof of the kiln, concentrically with the combustion chamber (14).

## Patentansprüche

1. Vorrichtung zur Verteilung von pulverförmigen Feststoffen in einem ringförmigen Querschnitt großen Durchmessers, bestehend aus einer Beschickungsleitung (40) für den die Feststoffe befördernden Gasstrom, die seitlich an die Außenwand (20) eines rohrförmigen doppelwandigen Körpers (18) nahe eines seiner Enden angeschlossen ist, und einer am anderen Ende besagten rohrförmigen Körpers vorgesehenen ringförmigen Austrittsöffnung (28) oder einer Reihe von gleichmäßig an diesem anderen Ende über den Umfang besagten rohrförmigen Körpers verteilten Öffnungen (128), dadurch gekennzeichnet, daß das Innere besagten rohrförmigen Körpers (18) eine ringförmige Kammer (32) mit vertikaler oder nahezu vertikaler Achse bildet, daß besagte Leitung (40) an den oberen Abschnitt angeschlossen ist, der geschlossen ist, sodaß besagter Strom in ungefähr radialer Richtung in besagte Kammer eintritt, daß der Flächeninhalt des Querschnitts besagter Kammer (32) mindestens im oberen Abschnitt deutlich größer ist als der Flächeninhalt des Querschnitts besagter Leitung (40) und der Flächeninhalt besagter ringförmiger Austrittsöffnung (28) bzw. der Gesamtflächeninhalt besagter Öffnungen (128).

2. Vorrichtung gemäß Anspruch 1, dadurch gekennzeichnet, daß das Verhältnis zwischen dem Flächeninhalt des Querschnitts des oberen zylindrischen Abschnitts der Kammer (32) und dem Flächeninhalt des Querschnitts der besagten ringförmigen Öffnung (28) bzw. dem Gesamtflächeninhalt der besagten Öffnungen (128) größer als 3 ist.

3. Vorrichtung gemäß Anspruch 1 oder 2, dadurch gekennzeichnet, daß das Verhältnis zwischen dem Flächeninhalt des Querschnitts des oberen zylindrischen Abschnitts der Kammer (32) und dem Flächeninhalt des Querschnitts der Beschickungsleitung (40) für den die Festkörper befördernden Gastrom größer als 3 ist.

4. Vorrichtung gemäß Anspruch 1, 2 oder 3, dadurch gekennzeichnet, daß der obere Abschnitt der Kammer (32) von zwei zylindrischen Innen- bzw. Außenwänden (20, 22) begrenzt wird, deren Achsen zusammenfallen.

5. Vorrichtung gemäß Anspruch 1, 2 oder 3, dadurch gekennzeichnet, daß der obere Abschnitt der Kammer (32) von zwei zylindrischen Innen- bzw. Außenwänden (20, 22) begrenzt wird, deren Achsen versetzt sind.

6. Vorrichtung gemäß Anspruch 4 oder 5, dadurch gekennzeichnet, daß die unteren Abschnitte (24, 26) besagter Wände so orientiert sind, daß sie einen ringförmigen zylindrischen, konischen oder konisch erweiterten Gasstrom bilden.

7. Vorrichtung gemäß irgendeinem der vorheringen Ansprüche, dadurch gekennzeichnet, daß besagte ringförmige Öffnung (28) mit Schaufeln (34) versehen ist, die derartig orientiert sind, daß sie dem Gasstrom eine Drehbewegung um die Achse der Vorrichtung herum verleihen.

8. Vorrichtung gemäß irgendeinem der Ansprüche 1 - 6, dadurch gekennzeichnet, daß sich besagte Öffnungen (128) am Ende von kurzen Kanälen befinden, die so orientiert sind, daß sie dem Gasstrom eine Drehbewegung um die Achse der Vorrichtung herum verleihen.

9. Vorrichtung gemäß irgendeinem der vorherigen Ansprüche, dadurch gekennzeichnet, daß besagte Leitung (40) von mehreren Leitungen mit flächengleichem Gesamtquerschnitt ersetzt wird, die an den oberen Teil der Kammer (32) angeschlossen werden, sodaß die von besagten Leitungen heranbeförderten Gasströme in ungefähr radialen Richtungen in diese Kammer eintreten.

10. Vertikaler Ofen zur Kalzinierung von pulverförmigen Feststoffen, bestehend aus einer auf der Ofendecke angeordneten Brennkammer und Mitteln zur Einführung der Feststoffe in den Ofen, dadurch gekennzeichnet, daß besagte Mittel aus einer auf der Ofendecke konzentrisch zur Brennkammer (14) angeordneten Vorrichtung gemäß irgendeinem der vorherigen Ansprüche bestehen.
